# EUROPEAN PATENT APPLICATION

(11) **EP 1 978 452 A1**
(43) Date of publication of application: **08.10.2008**
(21) Application number: 07702005.5
(22) Date of filing: 09.01.2007
(51) Int. Cl.: G06F 17/30

(54) **INTEGRATED DISPLAYING METHOD AND SYSTEM FOR DEMO FILES**

(30) Priority: 09.01.2006 CN 200610005439
(71) Applicant: Wuxi Evermore Software, Inc, Wuxi City, Jiangsu Province 214028 (CN)
(72) Inventor: GU, Wen, Wuxi, Jiangsu 214028 (CN)
(74) Representative: Price, Nigel John King
(86) International application number: PCT/CN2007/000073
(87) International publication number: WO 2007/079678

(57) **Abstract**

The present invention relates to an integrated broadcasting method and system of the demonstration manuscript. At least two demonstration manuscripts are introduced into an integration frame; said integration frame generates at least one integration demonstration file; said integration frame constructs a tree file structure; said integration demonstration file, the demonstration manuscripts included in said integration demonstration file and demonstration pages included in said demonstration manuscripts are set ordinally at each level of nodes of said tree file structure; the nodes which need to be broadcasted are marked; an integrated broadcasting list which is composed of items corresponding to the marked nodes is generated; and a broadcasting engine broadcasts orderly the items included in said integrated broadcasting list.

## Description

### FIELD OF THE TECHNOLOGY

The present invention relates to a project technology of the demonstration manuscript of the office software, and more particularly to a method and system for integrated broadcasting a plurality of demonstration manuscripts.

### BACKGROUND OF THE INVENTION

In modern business activities, diversified forms of the demonstration manuscripts are adopted for exhibiting products, expressing opinions and spreading knowledge to make audiences be provided with intuitionistic understanding in most of product recommendation meetings, academic conferences and teaching sites. The general demonstration mode is that a lecturer takes the lecture and at the same time operates the demonstration manuscript. At much occasion, the lecture contents of one or several lecturers are included in several demonstration manuscripts and a plurality of demonstration manuscripts need to be broadcasted according to a certain order. However, the traditional office software can only project one single demonstration manuscript orderly, or rearrange a part of pages of the single demonstration manuscript to be broadcasted orderly in a new combination. It cannot be implemented that several demonstration manuscripts are broadcasted continuously. Even more it cannot be implemented that an ordering broadcasting is performed to a batch of demonstration manuscripts and broadcasting in the form of mixed arrangement is performed to different pages in a plurality of demonstration manuscripts. Therefore, the lecturer can only switch the subjects through reading the correlative demonstration manuscripts. Obviously, the procedure of opening and closing the demonstration manuscripts frequently itself wastes the time comparatively. The procedure wastes the time and energy of the audiences virtually, also makes the lecture procedure not continuously enough and even appears awkward scenes, which reduces the spreading efficiency.

Of course, the lecturer seems to avoid the happening of the above situation through reediting and combining the contents of the plurality of files to generate a new demonstration manuscript in advance. However, the working rhythm of the modern people is very fast, and the lecture procedure is provided with the characteristics such as the diversity of the contents, the uncertainty of the form and the universality of the scope composed by the lecturers and so on. So it is not only insignificant but also is opposite to the concept of the Human-centeredness of the modern society that the lecturer is required to complete the preparatory work beforehand. Furthermore, the procedure that the lecturer reedits and organizes the demonstration manuscripts according to the different subjects, different objects and different time limit before the lecture every time is also a sort of repeated working. This wastes the time and energy as well as makes the lecture contents lack of flexibility and pertinency.

### SUMMARY OF THE INVENTION

The object of the present invention is to provide a method and system for integrating and orderly broadcasting a plurality of the demonstration manuscripts. Under the software environment having the integration function and the introduction function which is provided by the technology for integrating the files, it is implemented that a batch of the integration demonstration files, the demonstration manuscripts or the demonstration pages is amalgamated, arranged orderly and broadcasted through an organic combination of the integration technology, the introduction technology and the projecting technology. The technical problem of projecting the traditional demonstration manuscript separately is solved effectively and the using function of the office software is extended.

In order to accomplish the above object, the present invention provides an integrated broadcasting method of the demonstration manuscripts. Under the software environment having integration function and introduction function, the following steps are executed:

Step 1, at least two demonstration manuscripts are introduced into an integration frame;

Step 2, said integration frame generates at least one integration demonstration file;

Step 3, said integration frame constructs a tree file structure;

Step 4, said integration demonstration file, the demonstration manuscripts included in said integration demonstration file and demonstration pages included in said demonstration manuscripts are set ordinally at each level of nodes of said tree file structure;

Step 5, the nodes which need to be broadcasted are marked;

Step 6, an integrated broadcasting list which is composed of items corresponding to the marked nodes is generated; and

Step 7, a broadcasting engine is called to broadcast orderly the items included in said integrated broadcasting list.

In the above technical solution, said steps 3-6 may be as follows:

Step 3a, the tree file structure which includes a first level of the nodes is constructed in said integration frame;

Step 4a, integration demonstration files are set at the first level of the nodes of said tree file structure respectively;

Step 5a, the first level of the nodes which need to be broadcasted is marked; and

Step 6a, an integrated broadcasting list which is composed of the integration demonstration files corresponding to the first level of the marked nodes is generated.

In the above technical solution, said steps 3-6 may also be as follows:

Step 3b, the tree file structure which includes a first level and a second level of the nodes is constructed in said integration frame;

Step 4b, integration demonstration files are set at the first level of the nodes of said tree file structure respectively, and the demonstration manuscripts included in said integration demonstration files are set at the second level of the nodes of said tree file structure respectively;

Step 5b, the first level and the second level of the nodes which need to be broadcasted are marked; and

Step 6b, an integrated broadcasting list which is composed of the demonstration manuscripts corresponding to the second level of the marked nodes is generated.

In the above technical solution, said steps 3-6 further may also be as follows:

Step 3c, the tree file structure which includes a first level, a second level and a third level of the nodes is constructed in said integration frame;

Step 4c, integration demonstration files are set at the first level of the nodes of said tree file structure respectively, the demonstration manuscripts included in said integration demonstration files are set at the second level of the nodes of said tree file structure respectively, and the demonstration pages included in said demonstration manuscripts are set at the third level of the nodes of said tree file structure respectively;

Step 5c, the first level, the second level and the third level of the nodes which need to be broadcast are marked; and

Step 6c, an integrated broadcasting list which is composed of the demonstration pages corresponding to the third level of the marked nodes is generated.

Further, after the step of generating the integrated broadcasting list, the step of adjusting the broadcasting order of said integrated broadcasting list can be included and the step of setting said integrated broadcasting list to be broadcasted circularly can also be included. Further, after the step 7, the step of storing said broadcasting list as a broadcasting theme selectively can be included and the step of storing said broadcasting list and the corresponding pages as a new integration file selectively can also be included.

In order to accomplish the above object, the present invention provides an integrated broadcasting system of the demonstration manuscripts including:

a unit for introducing at least two demonstration manuscripts into an integration frame;

a unit for generating at least one integration demonstration file;

a unit for constructing a tree file structure;

a unit for setting said integration demonstration file, the demonstration manuscripts included in said integration demonstration file and demonstration pages included in said demonstration manuscripts ordinally at each level of nodes of said tree file structure;

a unit for marking the nodes which need to be broadcasted;

a unit for generating an integrated broadcasting list which is composed of items corresponding to the marked nodes; and

a unit for calling a broadcasting engine to broadcast orderly the items included in said integrated broadcasting list.

The traditional office software can only separately project one single demonstration manuscript and it cannot broadcast a batch of demonstration manuscripts continuously. Even more it cannot broadcast a batch of demonstration manuscripts orderly and broadcast different pages in a plurality of demonstration manuscripts in the form of mixed arrangement. For the above technical problems, the present invention provides a method for integrating a plurality of the demonstration manuscripts to be broadcasted orderly so as to solve the above technical problems drastically through an organic combination of the integration technology, the introduction technology and the projecting technology, and using the chance provided by the integration file technology. Under the software environment having integration function and introduction function, the technical solution of the present invention includes the following steps. At least two demonstration manuscripts are introduced into the integration frame and at least one integration demonstration file is generated. Through constructing a tree file structure, said integration demonstration file, the demonstration manuscripts included in said integration demonstration file and the demonstration pages included in said demonstration manuscripts are set ordinally at each level of nodes of said tree file structure. The nodes which need to be broadcasted are marked. At last, the integrated broadcasting list which is composed of items corresponding to the marked nodes is generated. The integration file technology is to store the data of all the demonstration manuscripts and their pages in the integration file, so the integrated broadcasting list generated by the above steps of the present invention is actually a new broadcasting item combination formed by any one or more integration demonstration files, any one or more demonstration manuscripts and any one or more demonstration pages. That is, said integrated broadcasting list is a combination solid to define a new broadcasting order. The broadcasting engine is called to broadcast the items contained by said integrated broadcasting list, the object of the present invention is implemented.

Further, the tree file structure created by the present invention includes 1-3 levels. Orderly broadcasting of each level of the contents is implemented through combining the items of the different levels. Namely, the combination of the first level, the second level or the third level can form the orderly broadcasting of a plurality of integration demonstration files, a plurality of demonstration manuscripts or a plurality of demonstration pages. Further, the present invention can implement the functions for adjusting the broadcasting order and broadcasting circularly through setting and adjusting the integrated broadcasting list. Meanwhile, the present invention can include the step of storing said broadcasting list as a broadcasting theme and also include the step of storing said broadcasting list and the correlative pages as one new integration file.

The present invention not only implements broadcasting a plurality of the demonstration manuscripts orderly and continuously, but also has an applied effect for furthest reducing the traditional editing workload. And the present invention embodies the flexibility and the real time that the widely-known technology is unable to realize.

The technical solution of the present invention will be described by the further detailed description through the following drawings and embodiments.

### BRIEF DESCRIPTION OF THE DRAWINGS

Fig. 1 is a flowchart of an integrated broadcasting method of the demonstration manuscripts in accordance with the present invention;

Fig.2 is a flowchart of broadcasting continuously the level of the integration demonstration files in accordance with the present invention;

Fig.3 is a schematic diagram of broadcasting continuously the level of the integration demonstration files in accordance with the present invention;

Fig.4 is a flowchart of broadcasting continuously the level of the demonstration manuscripts in accordance with the present invention;

Fig. 5 is a schematic diagram of broadcasting continuously the level of the demonstration manuscripts in accordance with the present invention;

Fig.6 is a flowchart of broadcasting continuously the level of the demonstration pages in accordance with the present invention;

Fig.7 is a schematic diagram of broadcasting continuously the level of the demonstration pages in accordance with the present invention; and

Fig.8 is a schematic diagram of a window for setting the broadcasting order in accordance with the present invention.

### DETAILED DESCRIPTION OF THE PREFERRED EMBODIMENTS

The present invention implements the function of broadcasting a plurality of the demonstration manuscripts continuously and orderly through an organic combination of the integration technology, the introduction technology and the projecting technology. The integration file technology is that all applications such as the Word Process, Excel and demonstration manuscript and so on are set in one software to be executed, one uniform interface is used and the data of the all applications are stored in one file, so that all of the files for different applications can be opened at the same time through executing one file opening command. Said integration file is a file which is composed of multiform application documents such as the Excel documents, the Word Process documents and demonstration manuscript documents. The users can switch between each of the application documents of the integration file to synchronously find the data in the different applications without switch between the different application software back and forth. Through the introduction technology, said integration file may make the working documents assemble in the form of the data object in the integration file by a certain organization manner. Specifically speaking, an integration frame is provided and all of the working documents are introduced into said integration frame and generated the corresponding integration file.

The integrated broadcasting method of the demonstration manuscripts of the present invention bases on the above technology and is further combined with the projecting technology of the demonstration manuscripts. It is implemented that a plurality of the integration demonstration files, a plurality of the demonstration manuscripts in a plurality of the integration demonstration files and a plurality of the demonstration pages in a plurality of the demonstration manuscripts are broadcasted continuously and orderly.

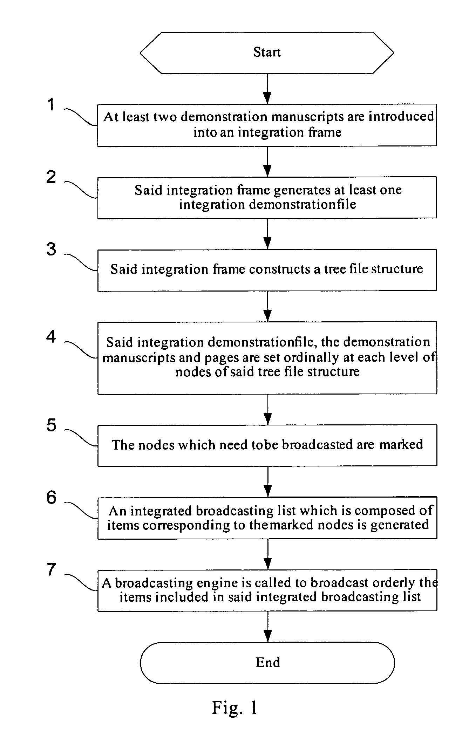

Fig.1 is a flowchart of the integrated broadcasting method of the demonstration manuscripts in accordance with the present invention. The steps are executed under the software environment having integration function and introduction function.

Step 1, at least two demonstration manuscripts are introduced into the integration frame;

Step 2, said integration frame generates at least one integration demonstration file;

Step 3, said integration frame constructs a tree file structure;

Step 4, said integration demonstration file, the demonstration manuscripts included in said integration demonstration file and the demonstration pages included in said demonstration manuscripts are set ordinally at each level of nodes of said tree file structure;

Step 5, the nodes which need to be broadcasted are marked;

Step 6, an integrated broadcasting list which is composed of items corresponding to the marked nodes is generated; and

Step 7, a broadcasting engine is called to broadcast orderly the items included in said integrated broadcasting list.

An integrated broadcasting system of the demonstration manuscripts of the present invention includes the following units. A unit for introducing at least two demonstration manuscripts into the integration frame; a unit for generating at least one integration demonstration file; a unit for constructing the tree file structure; a unit for setting said integration demonstration file, the demonstration manuscripts included in said integration demonstration file and the demonstration pages included in said demonstration manuscripts ordinally at each level of nodes of said tree file structure; a unit for marking the nodes which need to be broadcasted; a unit for generating the integrated broadcasting list which is composed of items corresponding to the marked nodes; and a unit for calling the broadcasting engine to broadcast orderly the items included in said integrated broadcasting list.

Because the data of the all application documents in the integration file are stored in this integration file, through the above steps, the generated integrated broadcasting list may include any one or more integration demonstration files, any one or more demonstration manuscripts and any one or more demonstration pages which are included in the integration file. Actually, a new items combination is formed for demonstrating and broadcasting. Specifically speaking, said step 6 may be to make the integration demonstration files corresponding to the marked nodes generate the integrated broadcasting list and form a new combination of a plurality of the integration demonstration files, so as to implement broadcasting continuously the level of the integration demonstration files; said step 6 may also be to make the demonstration manuscripts corresponding to the marked nodes generate the integrated broadcasting list and form a new combination of a plurality of the demonstration manuscripts of the different integration demonstration files, so as to implement broadcasting continuously the level of the demonstration manuscripts; said step 6 may still be to make the demonstration pages corresponding to the marked nodes generate the integrated broadcasting list and form a new combination of a plurality of the demonstration pages of the different demonstration manuscripts of the different integration demonstration files, so as to implement broadcasting continuously the level of the demonstration pages. The concrete explanations will be given respectively through the concrete embodiments as following.

Embodiment 1

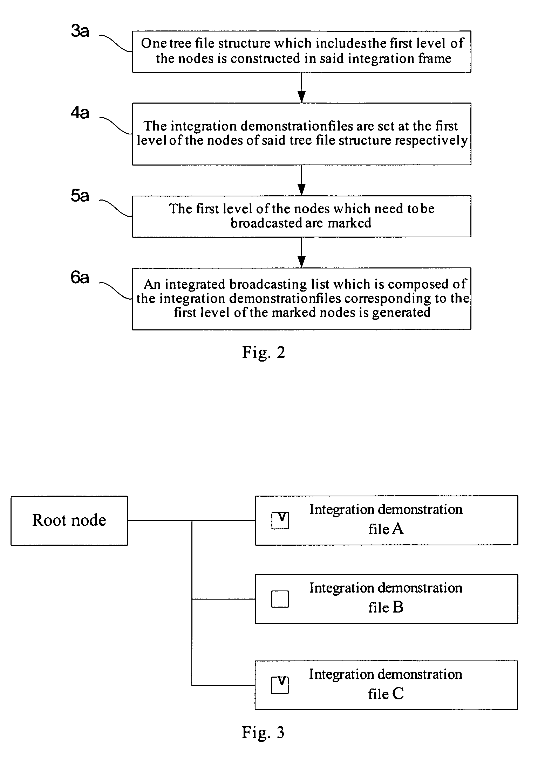

Fig.2 is a flowchart of broadcasting continuously the level of the integration demonstration files in accordance with the present invention. Said steps 3-6 in the Fig. 1 concretely include the following steps:

Step 3a, the tree file structure which includes the first level of the nodes is constructed in said integration frame;

Step 4a, said integration demonstration files are set at the first level of the nodes of said tree file structure respectively;

Step 5a, the first level of the nodes which need to be broadcasted are marked; and

Step 6a, an integrated broadcasting list which is composed of the integration demonstration files corresponding to the first level of the marked nodes is generated.

Fig.3 is a schematic diagram of broadcasting continuously the level of the integration demonstration files in accordance with the present invention, which illustrates one tree file structure including three integration demonstration files. The first level under the root node includes three integration broadcasting file A, B and C. In the present embodiment, the integrated broadcasting list is set to include only the broadcasting items of the first level. When the markers are set at the nodes of the integration demonstration files A and C, all the demonstration manuscripts and the corresponding demonstration pages included in the integration demonstration files A and C are set in the marked status at the same time according to the ascription relation. The generated integrated broadcasting list in the present embodiment points to the integration demonstration files A and C, so that the broadcasting engine broadcasts all of the contents included in said integration demonstration files A and C continuously.

In the present embodiment, in the integrated broadcasting system of the demonstration manuscripts, the unit for constructing the tree file structure is concretely a unit for constructing the tree file structure which includes the first level of the nodes; the unit for setting ordinally said integration demonstration file, the demonstration manuscripts included in said integration demonstration file and the demonstration pages included in said demonstration manuscripts at each level of nodes of said tree file structure is concretely a unit for setting integration demonstration files at the first level of the nodes of said tree file structure respectively; the unit for marking the nodes which need to be broadcasted is concretely a unit for marking the first level of the nodes which need to be broadcasted; and the unit for generating the integrated broadcasting list which is composed of items corresponding to the marked nodes is concretely a unit for generating the integrated broadcasting list which is composed of the integration demonstration files corresponding to the first level of the marked nodes.

Embodiment 2

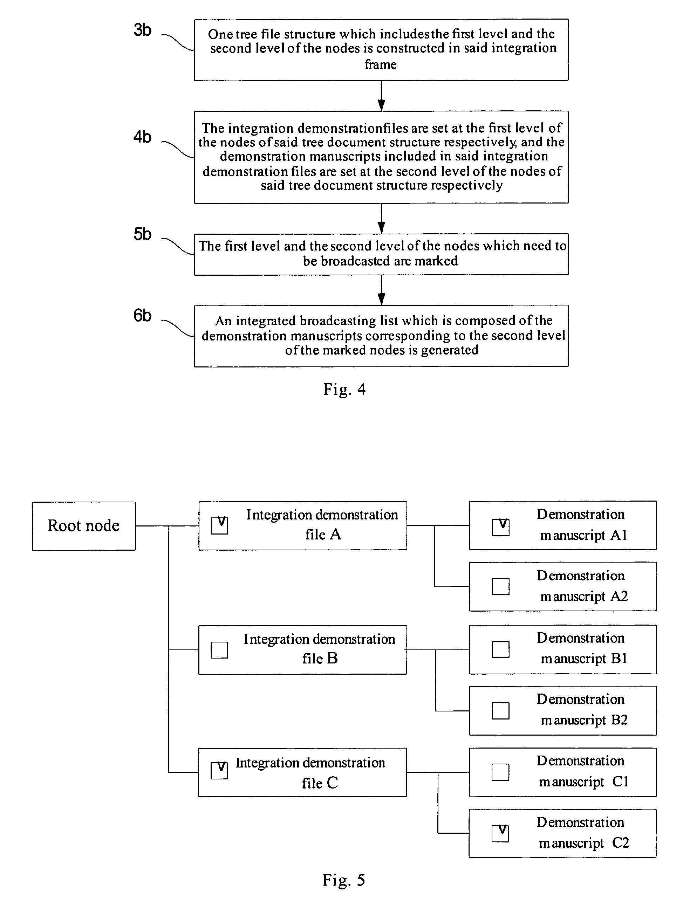

Fig.4 is a flowchart of broadcasting continuously the level of the demonstration manuscripts in accordance with the present invention. Said steps 3-6 in the Fig.1 concretely include the following steps:

Step 3b, the tree file structure which includes a first level and a second level of the nodes is constructed in said integration frame;

Step 4b, said integration demonstration files are set at the first level of the nodes of said tree file structure respectively, and the demonstration manuscripts included in said integration demonstration files are set at the second level of the nodes of said tree file structure respectively;

Step 5b, the first level and the second level of the nodes which need to be broadcasted are marked; and

Step 6b, an integrated broadcasting list which is composed of the demonstration manuscripts corresponding to the second level of the marked nodes is generated.

Fig. 5 is a schematic diagram of broadcasting continuously the level of the demonstration manuscripts in accordance with the present invention, which illustrates the tree file structure including three integration demonstration files and each integration demonstration file includes two demonstration manuscripts. The first level under the root node includes integration demonstration files A, B and C and the second level includes demonstration manuscripts A1, A2, B1, B2, C1 and C2. In the present embodiment, the integrated broadcasting list is set to include the broadcasting items of the first level and second level. When the markers are set at the integration demonstration file A, the demonstration manuscript A1, the integration demonstration file C and the demonstration manuscript C2, the demonstration pages included in the demonstration manuscripts A1 and C2 are also set in the marked status according to the ascription relation. The generated integrated broadcasting list in the present embodiment points to the demonstration manuscript A1 and the demonstration manuscripts C2, so that the broadcasting engine broadcasts all of the contents included in the demonstration manuscript A1 and the demonstration manuscript C2 continuously.

In the present embodiment, in the integrated broadcasting system of the demonstration manuscripts, the unit for constructing the tree file structure is concretely a unit for constructing the tree file structure which includes the first level and the second level of the nodes; the unit for setting ordinally said integration demonstration file, the demonstration manuscripts included in said integration demonstration file and the demonstration pages included in said demonstration manuscripts at each level of nodes of said tree file structure is concretely a unit for setting integration demonstration files at the first level of the nodes of said tree file structure respectively and setting the demonstration manuscripts included in said integration demonstration files at the second level of the nodes of said tree file structure respectively; the unit for marking the nodes which need to be broadcasted is concretely a unit for marking the first level and the second level of the nodes which need to be broadcasted; the unit for generating the integrated broadcasting list which is composed of items corresponding to the marked nodes is concretely a unit for generating the integrated broadcasting list which is composed of the demonstration manuscripts corresponding to the second level of the marked nodes.

Embodiment 3

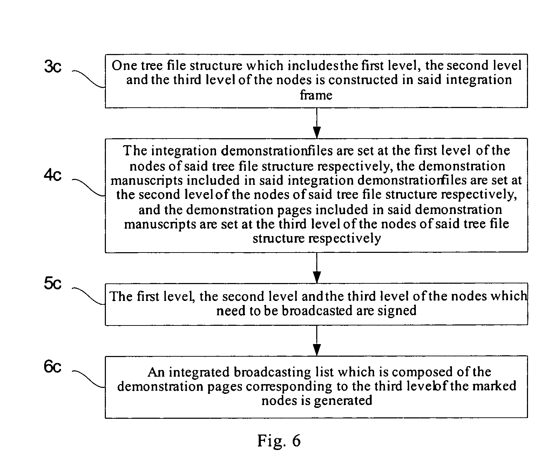

Fig.6 is a flowchart of broadcasting continuously the level of the demonstration pages in accordance with the present invention. Said steps 3-6 in the Fig.1 concretely include the following steps:

Step 3c, the tree file structure which includes a first level, a second level and a third level of the nodes is constructed in said integration frame;

Step 4c, said integration demonstration files are set at the first level of the nodes of said tree file structure respectively, the demonstration manuscripts included in said integration demonstration files are set at the second level of the nodes of said tree file structure respectively, and the demonstration pages included in said demonstration manuscripts are set at the third level of the nodes of said tree file structure respectively;

Step 5c, the first level, the second level and the third level of the nodes which need to be broadcasted are marked; and

Step 6c, an integrated broadcasting list which is composed of the demonstration pages corresponding to the third level of the marked nodes is generated.

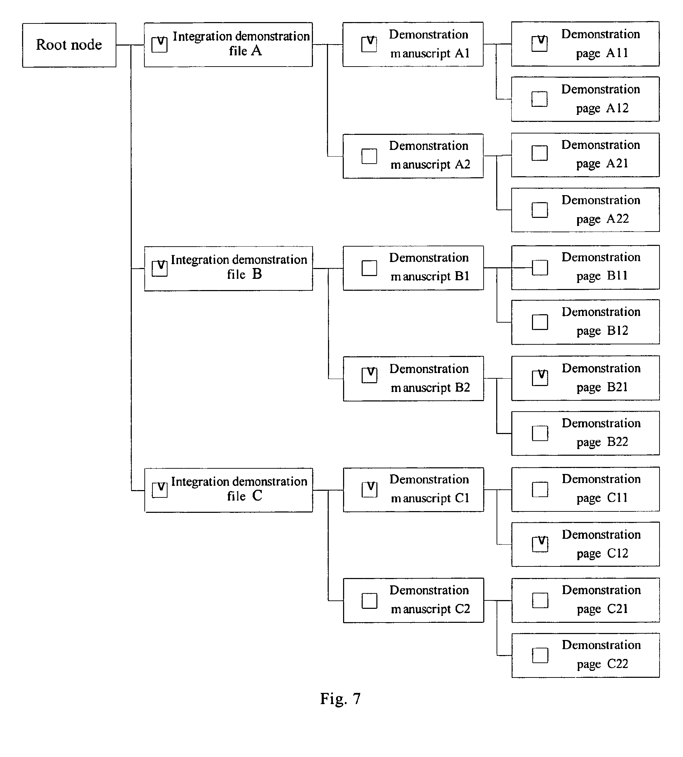

Fig.7 is a schematic diagram of broadcasting continuously the level of the demonstration pages in accordance with the present invention, which illustrates the tree file structure including three integration demonstration files, each integration demonstration file includes two demonstration manuscripts and each demonstration manuscript includes two demonstration pages. The first level under the root node includes integration demonstration files A, B and C, the second level includes demonstration manuscripts A1, A2, B1, B2, C1 and C2, and the third level includes demonstration pages A11, A12, A21, A22, B11, B12, B21, B22, C11, C12, C21 and C22. In the present embodiment, the integrated broadcasting list is set to include the broadcasting items of the first level, the second level and the third level. When the markers are set at the integration demonstration file A, the demonstration manuscript A1, the demonstration page A11, the integration demonstration file B, the demonstration manuscript B2, the demonstration page B21, the integration demonstration file C, the demonstration manuscript C1 and the demonstration pages C12, the generated integrated broadcasting list in the present embodiment includes the demonstration page A11, the demonstration page B21 and the demonstration page C12, so that the broadcasting engine broadcasts all of the contents included in the demonstration pages A11, B21 and C12 continuously.

In the present embodiment, in the integrated broadcasting system of the demonstration manuscripts, the unit for constructing the tree file structure is concretely a unit for constructing the tree file structure which includes the first level, the second level and the third level of the nodes in said integration frame; the unit for setting ordinally said integration demonstration file, the demonstration manuscripts included in said integration demonstration file and the demonstration pages included in said demonstration manuscripts at each level of nodes of said tree file structure is concretely a unit for setting said integration demonstration files at the first level of the nodes of said tree file structure respectively, setting the demonstration manuscripts included in said integration demonstration files at the second level of the nodes of said tree file structure respectively and setting the demonstration pages included in said demonstration manuscripts at the third level of the nodes of said tree file structure respectively; the unit for marking the nodes which need to be broadcasted is concretely a unit for marking the first level, the second level and the third level of the nodes which need to be broadcasted; the unit for generating the integrated broadcasting list which is composed of items corresponding to the marked nodes is concretely a unit for generating the integrated broadcasting list which is composed of the demonstration pages corresponding to the third level of the marked nodes.

The minimum item unit of the tree file structure founded in the technical solution of the present invention is the demonstration page, which is the third level of the items. Obviously, the effect of re-organizing the demonstration pages is equal to edit newly one demonstration manuscript, but its workload is very little that the traditional editing work lags behind by far. Therefore the present invention has the very practical function superiority.

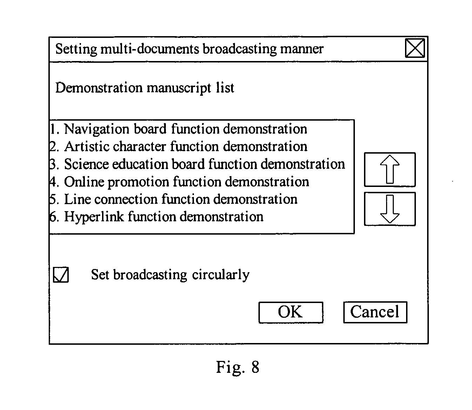

In the preferred technical solution of the present invention, after the step 6, the step of adjusting the broadcasting order of said integrated broadcasting list can be included and the step of setting said integrated broadcasting list to be broadcasted circularly can also be included. Accordingly, the integrated broadcasting system of the demonstration manuscripts of the present invention can include a unit for adjusting the broadcasting order of said integrated broadcasting list and also include a unit for setting said integrated broadcasting list to be broadcasted circularly. Therefore, regardless of the broadcasting item contained in the integrated broadcasting list is which level, all the items can be arranged according to the setting order and be broadcasted continuously and orderly in said arrangement. Both the step of adjusting the broadcasting order and the step of setting to be broadcasted circularly in the present invention are a further process to said integrated broadcasting list. The present invention is implemented by adopting a simple window manner as shown in the Fig. 8. The users can use upper arrow and lower arrow buttons provided by the interface to adjust the broadcasting order and the circularly broadcasting manner is implemented through setting the circularly broadcasting marker.

In the preferred technical solution of the present invention, the present invention can select to store the broadcasting list as a broadcasting theme and set in a file. Said broadcasting theme can run directly to implement replay when broadcasting next time. The integrated broadcasting system of the demonstration manuscript of the present invention can still include a unit for storing the broadcasting list as a broadcasting theme selectively. Furthermore, the present invention can also store the broadcasting list and the pages corresponding to the broadcasting list as a new integration file. The integrated broadcasting system of the demonstration manuscript of the present invention can still include a unit for storing said broadcasting list and the corresponding pages as a new integration file selectively.

Through the above explanation, it can be seen clearly that the present invention not only solves the technical problem of broadcasting a plurality of the demonstration manuscripts orderly and continuously, and acquires the broadcasting effect that the widely-known technology is unable to realize, but also the technical effect of the present invention influences the editing work before broadcasting the demonstration manuscripts further profoundly, furthest reduces the workload for traditional editing and organizing, and embodies the powerful flexibility and real time. For example, in the product promotion, the lecturer needs to give the lectures with different theme contents in the limited time on the different occasions and aiming to the different objects. For example, in view of the technical personnel, it is needed to introduce the technical means for the technical layer, and in view of the decision-making personnel, it is needed to stress the product special function. The traditional practice can only re-make new demonstration manuscript according to the theme and the time limit. Before speaking every time, the lecturer must spend a lot of time for editing and organizing the new demonstration manuscript, generate the numerous editions for dealing with various demands and pay the extra energy to manage these files. The present invention may complete the above time-and-energy squandering repeated work only through one integration file and a simple selection procedure. The lecturer can introduce the correlative contents into one integration file in advance, and divide the demonstration manuscripts of the different contents into the different integration demonstration file sorts or the demonstration manuscript sorts. According to the lecture outline, the lecturer needs only to select the corresponding demonstration manuscripts or the demonstration pages, and organize the lectured contents into a new integrated broadcasting list. Conceivably, this practice not only has the enormous flexibility, but also meets the times requirement which keeps pace with the times. The lecturer has this integration file to meet changes with constancy, even may carry on the organization or the adjustment of the lecture contents in several minutes before starting the lecture.

It should be understood that the above embodiments are only used to explain, but not to limit the technical solution of the present invention. In despite of describing the present invention in detail with reference to the preferred embodiments, it should be understood that various modifications, changes or equivalent replacements could be made by an ordinary person skilled in the relevant field without departing from the spirit and scope of the technical solution of the present invention, which should be covered in the extent of the claims of the present invention.

## Claims

1. An integrated broadcasting method of the demonstration manuscripts, under the software environment having integration function and introduction function, executing the following steps:
Step 1, introducing at least two demonstration manuscripts into an integration frame;
Step 2, said integration frame generating at least one integration demonstration file;
Step 3, said integration frame constructing a tree file structure;
Step 4, setting said integration demonstration file, the demonstration manuscripts included in said integration demonstration file and demonstration pages included in said demonstration manuscripts ordinally at each level of nodes of said tree file structure;
Step 5, marking nodes which need to be broadcasted;
Step 6, generating an integrated broadcasting list composed of items corresponding to the marked nodes; and
Step 7, calling a broadcasting engine to broadcast orderly the items included in said integrated broadcasting list.

2. The method according to claim 1, wherein said steps 3-6 concretely comprise:
Step 3a, constructing the tree file structure which includes a first level of the nodes in said integration frame;
Step 4a, setting integration demonstration files at the first level of the nodes of said tree file structure respectively;
Step 5a, marking the first level of the nodes which need to be broadcasted; and
Step 6a, generating the integrated broadcasting list composed of the integration demonstration files corresponding to the first level of the marked nodes.

3. The method according to claim 1, wherein said steps 3-6 concretely comprise:
Step 3b, constructing the tree file structure which includes a first level and a second level of the nodes in said integration frame;
Step 4b, setting integration demonstration files at the first level of the nodes of said tree file structure respectively, and setting the demonstration manuscripts included in said integration demonstration files at the second level of the nodes of said tree file structure respectively;
Step 5b, marking the first level and the second level of the nodes which need to be broadcasted; and
Step 6b, generating the integrated broadcasting list composed of the demonstration manuscripts corresponding to the second level of the marked nodes.

4. The method according to claim 1, wherein said steps 3-6 concretely comprise:
Step 3c, constructing the tree file structure which includes a first level, a second level and a third level of the nodes in said integration frame;
Step 4c, setting integration demonstration files at the first level of the nodes of said tree file structure respectively, setting the demonstration manuscripts included in said integration demonstration files at the second level of the nodes of said tree file structure respectively, and setting the demonstration pages included in said demonstration manuscripts at the third level of the nodes of said tree file structure respectively;
Step 5c, marking the first level, the second level and the third level of the nodes which need to be broadcasted; and
Step 6c, generating the integrated broadcasting list composed of the demonstration pages corresponding to the third level of the marked nodes.

5. The method according to any one of claims 1-4, further comprising a step of adjusting the broadcasting order of said integrated broadcasting list after the step of generating the integrated broadcasting list.

6. The method according to any one of claims 1-4, further comprising a step of setting said integrated broadcasting list to be broadcasted circularly after the step of generating the integrated broadcasting list.

7. The method according to claim 1, further comprising a step of selectively storing said broadcasting list as a broadcasting theme after said step 7.

8. The method according to claim 1, further comprising a step of selectively storing said broadcasting list and the corresponding pages as a new integration file after said step 7.

9. An integrated broadcasting system of the demonstration manuscripts, comprising:
a unit for introducing at least two demonstration manuscripts into an integration frame;
a unit for generating at least one integration demonstration file;
a unit for constructing a tree file structure;
a unit for setting said integration demonstration file, the demonstration manuscripts included in said integration demonstration file and demonstration pages included in said demonstration manuscripts ordinally at each level of nodes of said tree file structure;
a unit for marking the nodes which need to be broadcasted;
a unit for generating an integrated broadcasting list composed of items corresponding to the marked nodes; and
a unit for calling a broadcasting engine to broadcast orderly the items included in said integrated broadcasting list.

10. The system according to claim 9, wherein,
said unit for constructing the tree file structure is concretely a unit for constructing the tree file structure which includes a first level of the nodes;
said unit for setting ordinally said integration demonstration file, the demonstration manuscripts included in said integration demonstration file and the demonstration pages included in said demonstration manuscripts at each level of nodes of said tree file structure is concretely a unit for setting integration demonstration files at the first level of the nodes of said tree file structure respectively;
said unit for marking the nodes which need to be broadcasted is concretely a unit for marking the first level of the nodes which need to be broadcasted; and
said unit for generating the integrated broadcasting list which is composed of items corresponding to the marked nodes is concretely a unit for generating the integrated broadcasting list composed of the integration demonstration files corresponding to the first level of the marked nodes.

11. The system according to claim 9, wherein,
said unit for constructing the tree file structure is concretely a unit for constructing the tree file structure which includes a first level and a second level of the nodes;
said unit for setting ordinally said integration demonstration file, the demonstration manuscripts included in said integration demonstration file and the demonstration pages included in said demonstration manuscripts at each level of nodes of said tree file structure is concretely a unit for setting integration demonstration files at the first level of the nodes of said tree file structure respectively and setting the demonstration manuscripts included in said integration demonstration files at the second level of the nodes of said tree file structure respectively;
said unit for marking the nodes which need to be broadcasted is concretely a unit for marking the first level and the second level of the nodes which need to be broadcasted; and
said unit for generating the integrated broadcasting list which is composed of items corresponding to the marked nodes is concretely a unit for generating the integrated broadcasting list composed of the demonstration manuscripts corresponding to the second level of the marked nodes.

12. The system according to claim 9, wherein,
said unit for constructing the tree file structure is concretely a unit for constructing the tree file structure which includes a first level, a second level and a third level of the nodes in said integration frame;
said unit for setting ordinally said integration demonstration file, the demonstration manuscripts included in said integration demonstration file and the demonstration pages included in said demonstration manuscripts at each level of nodes of said tree file structure is concretely a unit for setting integration demonstration files at the first level of the nodes of said tree file structure respectively, setting the demonstration manuscripts included in said integration demonstration files at the second level of the nodes of said tree file structure respectively and setting the demonstration pages included in said demonstration manuscripts at the third level of the nodes of said tree file structure respectively;
said unit for marking the nodes which need to be broadcasted is concretely a unit for marking the first level, the second level and the third level of the nodes which need to be broadcasted; and
said unit for generating the integrated broadcasting list which is composed of items corresponding to the marked nodes is concretely a unit for generating the integrated broadcasting list which is composed of the demonstration pages corresponding to the third level of the marked nodes.

13. The system according to any one of claims 9-12, wherein said system further comprises a unit for adjusting the broadcasting order of said integrated broadcasting list.

14. The system according to any one of claims 9-12, wherein said system further comprises a unit for setting said integrated broadcasting list to be broadcasted circularly.

15. The system according to claim 9, wherein said system further comprises a unit for selectively storing said broadcasting list as a broadcasting theme.

16. The system according to claim 9, wherein said system further comprises a unit for selectively storing said broadcasting list and the corresponding pages as a new integration file.
